(19)

Europäisches
Patentamt

European
Patent Office

Office européen
des brevets

(11) **EP 2 928 145 A1**

(12) **EUROPEAN PATENT APPLICATION**

(43) Date of publication:
**07.10.2015 Bulletin 2015/41**

(51) Int Cl.:
*H04L 29/06* (2006.01)      *H04L 12/801* (2013.01)
*H04L 12/811* (2013.01)

(21) Application number: **14305481.5**

(22) Date of filing: **02.04.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Montalvo, Luis**
**35 576 Cesson Sévigné (FR)**

• **Le Bolzer, Françoise**
**35 576 Cesson Sévigné (FR)**
• **Gouache, Stéphane**
**35 576 Cesson Sévigné (FR)**

(74) Representative: **Browaeys, Jean-Philippe et al**
**Technicolor**
**1, rue Jeanne d'Arc**
**92443 Issy-les-Moulineaux (FR)**

(54) **Method for estimating a bandwidth associated with a connection between a client terminal and at least one server, corresponding client terminal**

(57)     Client terminal adapted to request and receive, from a server (SE), one or several segments of a multimedia content available at several representations, which comprises:
- a computing module (7) configured to determine the Mathis' bound associated with a connection between said client terminal (CT) and a server for requesting a given segment of said multimedia content and to determine the average bit-rate of the last segment received, before said given segment, by the client terminal (CT) from the server (SE);
- a selecting module (8) configured to select the minimum value between the determined Mathis' bound and the determined average bit-rate;
- a bandwidth estimator (9) configured to estimate a bandwidth associated with said connection by using said selected minimum value.

Figure 2

EP 2 928 145 A1

**Description**

TECHNICAL FIELD

The present invention relates generally to the domain of the adaptive streaming technology over, for instance but not exclusively, HTTP (HyperText Transfer Protocol) and, in particular, to the estimation of the bandwidth associated with a connection between a client terminal and one or several servers.

BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Adaptive streaming over HTTP (also called multi-bitrate switching or HAS) is quickly becoming a major technology for multimedia content distribution. Among the HTTP adaptive streaming protocols which are already used, the most famous are the HTTP Live Streaming (HLS) from Apple, the Silverlight Smooth Streaming (SSS) from Microsoft, the Adobe Dynamic Streaming (ADS) from Adobe and the Dynamic Adaptive Streaming over HTTP (DASH) developed by 3GPP within the SA4 group.

When a client terminal wishes to play an audiovisual content (or A/V content) in adaptive streaming, it first has to get a file describing how this A/V content might be obtained. This is generally done through the HTTP protocol by getting a description file, so-called manifest, from an URL (Uniform Resource Locator), but can be also achieved by other means (e.g. broadcast, e-mail, SMS and so on). The manifest basically lists the available representations (also called instances or versions) of such an A/V content (in terms of bitrate, resolution and other properties); one representation per quality level (bitrate). Each representation is made of a series of segments (also called chunks) of equal duration - accessible by a separate URL - and has a set of descriptive elements attached for selection by the client. Said manifest is generated in advance and delivered to the client terminal by, for instance, a remote server.

Indeed, the stream of data corresponding to the A/V content is available on an HTTP server with different qualities. The highest quality is associated with a high bitrate; the lowest quality is associated with a low bitrate. This allows distribution to many different terminals which might be subject to highly varying network conditions.

The whole data stream of each representation is divided into segments of equal duration which are made such that a client terminal may smoothly switch from one quality level to another between two segments. As a result, the video quality may vary while playing but rarely suffers from interruptions (also called freezes).

One of the main factors that determines the performance of a HAS client terminal is its ability to accurately estimate the bandwidth available to communicate with a server. Indeed, the bandwidth estimation is used to choose the best suitable representation for the next segment. Basically, the average bit-rate (b) of the last segment downloaded by the client is computed, at the application level, as the ratio of the size of the segment in terms of bits (D) and the time elapsed to receive the segment in terms of seconds (T). The time elapsed to receive the segment is the sum of the time of the segment request issued by the HAS client ($t_{REQ}$) and the time to download the segment ($t_{DL}$). Therefore, the computation of b is given by the following equation:

$$b = \frac{D}{t_{REQ} + t_{DL}}$$

In order to smooth the transient variations of capacity of the communications channel, this bit-rate is commonly averaged by the HAS client before performing the final bit-rate selection.

The main bandwidth estimation algorithms for HTTP adaptive streaming clients, published in the research literature, are based either on a Simple Exponential moving average (as described in "An experimental evaluation of rate-adaptation algorithms in adaptive streaming over HTTP", Saamer Akhshabi, Ali C. Begen, and Constantine Dovrolis, In Proceedings of the Second Annual ACM Conference on Multimedia Systems, MMSys '11, pages 157-168, New York, NY, USA, 2011. ACM.) or on a Double Exponential Smoothing (as described in "Distributed & adaptive HTTP streaming", Stephane Gouache, Guillaume Bichot, Amine Bsila, and Christopher Howson, In Proceedings of the IEEE International Conference on Multimedia and Expo (ICME'2011), pages 1-6, July 2011).

Exponential Smoothing is an estimation method that continually revises the estimation of a time series in the light of more recent measurements. Exponential Smoothing assigns exponentially decreasing weights to the measurements as they get older, so that more recent measurements are given relatively more weight in the estimation than older ones.

Simple Exponential Smoothing assumes that the time series fluctuates around a reasonably stable mean. Let $\hat{b}$ be the estimation of the available bandwidth, and let b be the real measurement of the bandwidth. The estimation of the bandwidth at time t can be computed recursively in terms of the estimation of the bandwidth and the actual measurement of the bandwidth at time t-1 according to the following equation:

$$\hat{b}_t = \alpha \times b_{t-1} + (1-\alpha) \times \hat{b}_{t-1}$$

wherein the coefficient $\alpha$ is the constant smoothing factor belonging to the range [0; 1]. A greater value of $\alpha$ means that older measurements are ignored faster. The initial value of the bandwidth estimation is unknown and it is common practice to initialize it to the value of the first measurement as follows, $\hat{b}_0 = b_0$.

Simple Exponential Smoothing does not perform well when there is an upward bandwidth trend or a downward bandwidth trend in the time series. In such a situation, the Double Exponential Smoothing method is more suitable. Double Exponential Smoothing is similar to Simple Exponential Smoothing except that the estimation of the bandwidth is computed in terms of an additional "bandwidth trend estimation" term (called $\hat{v}$) besides the bandwidth estimation and the bandwidth measurement used in Simple Exponential Smoothing. Double Exponential Smoothing is based on the recursive computation of the following two equations:

$$\hat{b}_t = \alpha \times b_{t-1} + (1-\alpha) \times (\hat{b}_{t-1} + \hat{v}_{t-1}), 0 \leq \alpha \leq 1$$

$$\hat{v}_t = \beta \times (\hat{b}_t - \hat{b}_{t-1}) + (1-\beta) \times \hat{v}_{t-1}, 0 \leq \beta \leq 1$$

wherein $\alpha$ is the constant smoothing factor and $\beta$ is the trend smoothing factor. The initial estimation values for $\hat{b}$ and $\hat{v}$ can be initialized as follows, $\hat{b}_0 = b_0$ and $\hat{v}_0 = b_0 - b_{-1}$.

The known methods used to estimate the bandwidth available are acceptable when the transmission channel is robust and quasi lossless. When the environment becomes noisy (such as a 3G mobile channel with bursty losses), the accuracy of the bandwidth estimation degrades dramatically. Indeed, the HAS client estimation is performed at the application level without any feedback about the transmission conditions. The client observation is limited to the segment reception period and its estimation is defined as the size of the downloaded data divided by the time it takes to download it. As a consequence, when the estimation is made during a lossy and bursty period, the real channel capacity might be underestimated, while if it is performed during a lossless period it might be overestimated.

Selecting a bit-rate based on inaccurate bandwidth estimations may have a huge impact on the user experience. Indeed a bandwidth over-estimation can lead to the annoying frame freeze phenomenon, due to an unacceptable late segments ratio. Moreover, a series of alternating over-estimations and underestimations of the bandwidth can cause oscillations in the selection of the bit-rate of the representation, which adversely affects the user perception.

The present invention overcomes at least some of the above mentioned drawbacks.

SUMMARY

The invention concerns a method for estimating a bandwidth associated with a connection between a client terminal and a server, said client terminal being configured to request and receive, from said server, one or several segments of a multimedia content available at several representations, which is remarkable in that it comprises:

- determining the Mathis' bound associated with said connection between said client terminal and the server for requesting a given segment of said multimedia content;
- determining the average bit-rate of the last segment received, before said given segment, by the client terminal from the server;
- selecting the minimum value between the determined Mathis' bound and the determined average bit-rate;
- estimating the bandwidth by using said selected minimum value.

Thus, thanks to the invention, the method for estimating bandwidth may enhance the accuracy of a client measurement of the bandwidth available in a lossy environment. The Mathis' bound can be used as an upper limit for the estimation. Such a method may contribute to overcome the bandwidth over-estimation that might lead the client terminal (e.g. a HAS client) into the frame freeze phenomenon and the instability in the selection of the bit-rate of the representation due to frequent changes in the choice of the bit-rate representation for the next segment, which is disturbing for an end user.

In an embodiment compliant with the present invention, the Mathis' bound of said connection is determined by:

$$M = C \times \frac{MSS}{RTT \times \sqrt{p}}$$

wherein:

- M is the Mathis' bound;
- C is a constant of proportionality;
- MSS is the maximum segment size;
- RTT is the round-trip-time of the connection;
- p is the probability that a packet of a segment is dropped.

In another embodiment of the present invention, when said connection comprises several sub-connections, the Mathis' bound associated with the connection is determined by:

$$M = \sum_{i=0}^{n-1} k_i \times M_i$$

wherein:

- $k_i$ is a split factor corresponding to the fraction of the bandwidth achievable by a sub-connection i, with $\sum_{i=0}^{n-1} k_i = 1$;
- $M_i$ is the Mathis' bound associated with a sub-connection i.

In a first aspect compliant with the present invention, the Mathis' bound can be determined, at the application layer of the Internet model, by using values of the probability of packet drop p and the round-trip time RTT chosen from a determined set of values.

In a variant, the Mathis' bound may be determined, at the application layer of the Internet model, by using values of the probability of packet drop p and the round-trip time RTT measured at the transport layer of the Internet model.

In a second aspect compliant with the present invention, the average bit-rate of the given segment can be determined by:

$$b = \frac{D}{t_{REQ} + t_{DL}}$$

wherein:

- b is the average bit-rate of the last segment received;
- D is the size of the last segment received;
- $t_{REQ}$ is the time elapsed between the request from the client terminal and its arrival to the server;
- $t_{DL}$ is the time to download the last segment received from the server, before said requested given segment.

In particular, the average bit-rate of the given segment can be determined at the application layer of the Internet model.

In a further embodiment, said bandwidth estimation can implement the following equation:

$$\hat{b}_t = \alpha \times b_{t-1} + (1-\alpha) \times \hat{b}_{t-1}$$

wherein:

- $\hat{b}_t$ is an estimation of the bandwidth at time t;
- $b_{t-1}$ is the selected minimum value;
- $\alpha$ is a constant smoothing factor belonging to the range [0; 1].

In a variant, said bandwidth estimation may implement the following two equations:

$$\hat{b}_t = \alpha \times b_{t-1} + (1-\alpha) \times (\hat{b}_{t-1} + \hat{v}_{t-1}), 0 \le \alpha \le 1$$

$$\hat{v}_t = \beta \times (\hat{b}_t - \hat{b}_{t-1}) + (1-\beta) \times \hat{v}_{t-1}, 0 \le \beta \le 1$$

wherein:

- $\hat{b}_t$ is an estimation of the bandwidth at time t;
- $b_{t-1}$ is selected minimum value;
- $\hat{v}_t$ is a bandwidth trend estimation at time t;
- $\alpha$ is a constant smoothing factor belonging to the range [0; 1];
- $\beta$ is a trend smoothing factor belonging to the range [0; 1].

Moreover, said connection can be a Transmission Control Protocol connection.
In particular, said connection may be a multipath connection supported by the Multi Path Transmission Control Protocol.
The present invention also concerns a client terminal adapted to request and receive, from at least one remote server, segments of a multimedia content available at several representations. Said client terminal comprises:

- a computing module configured to determine the Mathis' bound associated with a connection between said client terminal and a server for requesting a given segment of said multimedia content and to determine the average bit-rate of the last segment received, before said given segment, by the client terminal from the server;
- a selecting module configured to select the minimum value between the determined Mathis' bound and the determined average bit-rate;
- a bandwidth estimator configured to estimate a bandwidth associated with said connection by using said selected minimum value.

In an embodiment compliant with the present invention, the computing module can be further configured to select values of a probability p, that a packet of a segment is dropped, and a round-trip time RTT from a set of determined values, in order to determine the Mathis' bound.
In addition, the computing module can be further configured to retrieve values of a probability p, that a packet of a segment is dropped, and a round-trip time RTT, both measured at the transport layer of the Internet model in order to determine the Mathis' bound.
In particular, said client terminal can be an HTTP Adaptive Streaming client.
In addition, the present invention also concerns a non-transitory computer readable medium comprising a computer program product recorded thereon and capable of being run by a processor, including program code instructions for implementing the steps of the method previously described.
Certain aspects commensurate in scope with the disclosed embodiments are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below.

BRIEF DESCRIPTION OF THE DRAWINGS

The invention will be better understood and illustrated by means of the following embodiment and execution examples, in no way limitative, with reference to the appended figures on which:

- Figure 1 is a schematic diagram of a Client-Server network architecture wherein the present invention might be implemented;
- Figure 2 is a block diagram of an example of a client terminal according to a given embodiment of the present invention;
- Figure 3 is a flow chart illustrating the method for estimating a bandwidth associated with a connection between a client terminal of Figures 1 and 2 and at least one server according to the given embodiment.

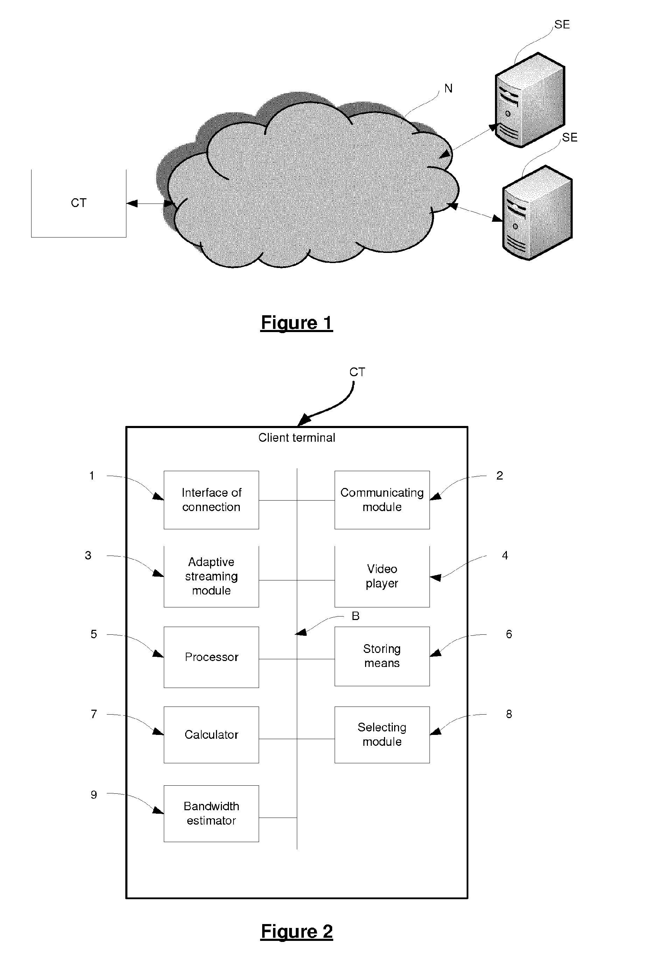

In Figures 1 and 2, the represented blocks are purely functional entities, which do not necessarily correspond to physically separate entities. Namely, they could be developed in the form of software, hardware, or be implemented in one or several integrated circuits, comprising one or more processors.

Wherever possible, the same reference numerals will be used throughout the figures to refer to the same or like parts.

DESCRIPTION OF EMBODIMENTS

It is to be understood that the figures and descriptions of the present invention have been simplified to illustrate elements that are relevant for a clear understanding of the present invention, while eliminating, for purposes of clarity, many other elements found in typical digital multimedia content delivery methods and systems. However, because such elements are well known in the art, a detailed discussion of such elements is not provided herein. The disclosure herein is directed to all such variations and modifications known to those skilled in the art.

According to a given embodiment, the present invention is depicted with regard to the HTTP adaptive streaming protocol (or HAS). Naturally, the invention is not restricted to such a particular environment and other adaptive streaming protocol could of course be considered and implemented.

As depicted in Figure 1, the Client-Server network architecture, supported by one or several networks N (only one is represented in the Figure 1), wherein the present invention might be implemented, comprises one or several client terminals CT (only one is represented in the Figure 1) and one or more HTTP servers SE. According to DASH, such servers SE are also named Media Origin. They generate for instance the media presentation description (or MPD), so called manifest. This is the source of content distribution: the multimedia content may come from some external entity and be converted to HAS format at the Media Origin.

A client terminal CT wishes to obtain a multimedia content from one of the HTTP servers SE after having established a connection (e.g. a TCP connection). Said multimedia content is divided into a plurality of segments. It is assumed that the multimedia content is available at different representations at the server SE. The HTTP server SE is able to stream segments to the client terminal CT, upon the client request, using HTTP adaptive streaming protocol over one or more TCP/IP connections.

According to the given embodiment as described in Figure 2, the client terminal CT comprises at least:

- an interface of connection 1 (wired and/or wireless, as for example Wi-Fi, Ethernet, etc.) to the network;
- a communication module 2 containing the protocol stacks to communicate to the HTTP server SE. In particular the communication module 2 comprises the TCP/IP stack well known in the art. Of course, it could be any other type of network and/or communicating means enabling the client terminal CT to communicate to the HTTP server SE;
- an adaptive streaming module 3 which receives the HTTP streaming multimedia content from the HTTP server SE. It continually selects the segment at the bit rate that better matches the network constraints and its own constraints;
- a video player 4 adapted to decode and render the multimedia content;
- one or more processors 5 for executing the applications and programs stored in a non-volatile memory of the client terminal CT;
- storing means 6, such as a volatile memory, for buffering the segments received from the HTTP server SE before their transmission to the video player 4;
- an internal bus B to connect the various modules and all means well known to the skilled in the art for performing the generic client terminal functionalities.

In the given embodiment, the client terminal CT is a portable media device, a mobile phone, a tablet or a laptop, a TV set, a Set Top Box, a game device or an integrated circuit. Naturally, the client terminal CT might not comprise a complete video player, but only some sub-elements such as the ones for demultiplexing and decoding the media content and might rely upon an external means to display the decoded content to the end user. In this case, the client terminal CT is a HTTP Adaptive Streaming (HAS) capable video decoder, such as a set-top box.

According to the given embodiment, the client terminal CT also comprises a calculator 7 (also called computing module) which is configured to determine a Mathis' bound associated with the TCP connection between the client terminal CT and the server SE for requesting a given segment at time t of said multimedia content. The Mathis' bound is determined according to the following equation:

$$M = C \times \frac{MSS}{RTT \times \sqrt{p}}$$

wherein:

- M is the Mathis' bound;
- C is a constant of proportionality that lumps together several terms that are typically constant for a given combination of TCP implementation, ACK strategy, loss mechanism, and the constants used in the Congestion Avoidance algorithm itself. Some examples of the values that C can take, when an every-packet ACK-strategy is adopted, are: C = 1,22, if a periodic loss is assumed, and C = 1,31, if a random loss is assumed. In an example of the given embodiment, C = 1;
- MSS is the maximum segment size (i.e. the maximum size of the payload of a single TCP segment);
- RTT is the round-trip-time (RTT is assumed to be constant, i.e. the TCP connection has sufficient bandwidth and low enough load not to overflow any queues);
- p is the probability that a packet of a segment is dropped by the TCP connection (p is assumed to be a good approximation to the packet loss of the TCP connection).

The Mathis' model is a TCP performance model that lets predict the bandwidth of a TCP connection under light to moderate packet losses, such as those caused by network congestion. It assumes that TCP avoids retransmission timeouts and has always sufficient receiver window and sender data. These assumptions correspond to the steady-state behaviour of TCP. It is worth noting that the Mathis' bound is an upper bound of the bandwidth reachable with the TCP connection.

Moreover, the calculator 7 is further adapted to compute an average bit-rate of the last segment received by the client terminal CT from the server SE (i.e. at time t-1, before the given segment t). The average bit-rate of the last received segment is determined by:

$$b = \frac{D}{t_{REQ} + t_{DL}}$$

wherein:

- b is the average bit-rate of the last segment received by the client terminal CT;
- D is the size of the last received segment in terms of bits;
- $t_{REQ}$ is the time elapsed between the request of the last segment (at time t-1) from the client terminal CT and its arrival to the server SE;
- $t_{DL}$ is the time to download the last received segment (at time t-1) from the server SE.

According to the given embodiment and as shown on Figure 2, the client terminal CT also comprises:

- a selecting module 8 configured to select the minimum value (named $b_{t-1}$) between the Mathis' bound and the average bit-rate determined by the calculator 7, so that:

$$b_{t-1} = Min\left[M, \frac{D}{t_{REQ} + t_{DL}}\right]$$

- a bandwidth estimator 9 configured to estimate a bandwidth associated with the TCP connection by using the selected minimum value.

In a first example compliant with the given embodiment, the estimation of the bandwidth - performed by the estimator 9 - is based on a Simple Exponential moving average as previously described. The estimation of the bandwidth at time t can be computed recursively in terms of the estimation of the bandwidth and the actual measurement of the bandwidth at time t-1 according to the following equation:

$$\hat{b}_t = \alpha \times b_{t-1} + (1 - \alpha) \times \hat{b}_{t-1}$$

wherein:

- $\hat{b}_t$ is an estimation of the bandwidth at time t;
- $b_{t-1}$ is the computed minimum value at time t-1;
- $\alpha$ is a constant smoothing factor belonging to the range [0; 1]. A greater value of $\alpha$ means that older measurements are ignored faster.

The value of the first measurement is assumed to be $\hat{b}_0 = b_0$.

In a second example compliant with the given embodiment, the estimation of the bandwidth is based on the Double Exponential Smoothing method also previously described, which is based on the recursive computation of the following two equations:

$$\hat{b}_t = \alpha \times b_{t-1} + (1 - \alpha) \times (\hat{b}_{t-1} + \hat{v}_{t-1}), 0 \le \alpha \le 1$$

$$\hat{v}_t = \beta \times (\hat{b}_t - \hat{b}_{t-1}) + (1 - \beta) \times \hat{v}_{t-1}, 0 \le \beta \le 1$$

wherein:

- $\hat{b}_t$ is the estimation of the bandwidth at time t;
- $\hat{b}_{t-1}$ is the estimation of the bandwidth at time t-1;
- $b_{t-1}$ is the computed minimum value at time t-1;
- $\hat{v}_t$ is a bandwidth trend estimation at time t;
- $\alpha$ is a constant smoothing factor belonging to the range [0; 1];
- $\beta$ is a trend smoothing factor belonging to the range [0; 1].

The initial estimation values for $\hat{b}$ and $\hat{v}$ can be initialised as follows, $\hat{b}_0 = b_0$ and $\hat{v}_0 = b_0 - b_{-1}$.

Naturally, it should be understood that other suitable bandwidth estimation algorithms might be used without departing from the given embodiment.

According to the given embodiment, the Mathis' bound is determined at the application layer of the Internet model, by using values of the probability of packet drop p and the round-trip time RTT chosen from a set of values determined from measurements in some typical situations. These values could be stored in a table (e.g. in the storing means 6), so that, when the client terminal CT detects that its access channel is WiFi, it can, for instance, select the corresponding ADSL characteristics (e.g. RTT = 20 ms and packet loss = 0.7 %) and, when it detects that its access channel is 3G, it can select the corresponding 3G characteristics (e.g. RTT = 60 ms and packet loss = 1 %).

In a variant of the given embodiment, the Mathis' bound is determined, at the application layer, by using values of the probability of packet drop p and the round-trip time RTT measured at the transport layer of the Internet model (e.g. the time stamps option of the TCP protocol could be used to measure the RTT and the observation of out-of-order TCP segments in the sequence number of a TCP connection can be used as an approximation to the packet loss).

In this variant, a cross-layer implementation is used. In order to have an accurate estimation of the Mathis' bound, the transport layer is used to measure the RTT and the packet loss p and the application layer is used to determine

$$b_{t-1} = Min\left[M, \frac{D}{t_{REQ} + t_{DL}}\right]$$ (wherein M is computed by the application layer using the round-trip-time RTT and the packet loss p measured by the transport layer, for every segment, and, for instance, provided to the application layer through a dedicated API (Application Programming Interface)).

Since the Mathis' bound is computed using accurate RTT and p measurements of the actual communications channel, the cross layer variant may be more accurate than the application layer one.

This cross layer variant can be classified as a passive cross-layer bandwidth estimation method:

- "passive": the bandwidth estimation is based on traffic already present in the communications channel (i.e. no dummy packets are used for measuring the RTT as is the case in the active bandwidth estimation methods); and
- "cross-layer": the method is based on transferring the average of the RTT and packet loss measurements of the communications channel from the transport layer to the applications layer for the bandwidth estimation.

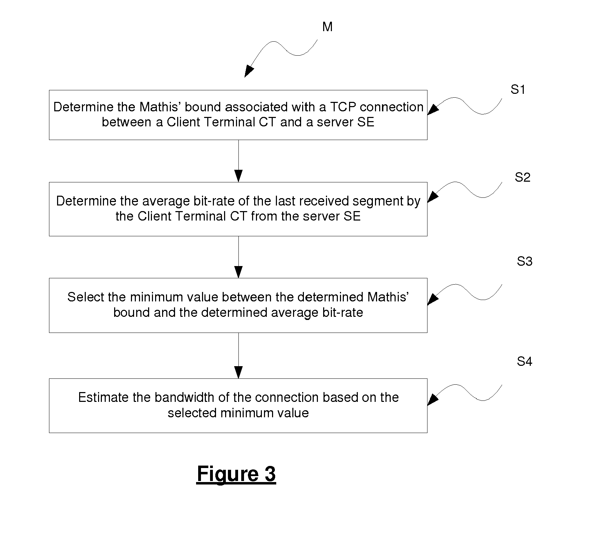

According to the given embodiment, and as shown in the Figure 3, the method M for estimating - at the client terminal CT - the bandwidth associated with the connection between said client terminal CT and the server SE, comprises:

- determining (step S1), thanks to the calculator 7 of the client terminal CT, the Mathis' bound associated with the connection between the client terminal CT and the server SE;
- determining (step S2), thanks to the calculator 7 of the client terminal CT, the average bit-rate of the last segment received by the client terminal CT from the server SE before the requested given segment;
- selecting (step S3), thanks to the selecting module 8, the minimum value between the determined Mathis' bound and the determined average bit-rate;
- estimate (step S4), by the bandwidth estimator 9, the bandwidth by using said selected minimum value.

Thus, the method M may contribute to overcome the bandwidth over-estimation that might lead the HAS client terminal into the frame freeze phenomenon and the instability in the selection of the bit-rate of the representation, which is disturbing for the end user.

Obviously, the steps of the method M may be performed in a different order, without departing from the preferred embodiment.

In a further variant of the given embodiment, when the TCP connection between the client terminal CT and the server SE comprises n sub-connections (i.e. the HTTP Adaptive Streaming protocol runs over the Multi Path Transmission Control Protocol) and thus forms a MPTCP connection, the Mathis' bound associated with the MPTCP connection is determined by:

$$M = \sum_{i=0}^{n-1} k_i \times M_i$$

wherein:

- $k_i$ is a split factor corresponding to the fraction of the bandwidth achievable by a sub-connection i, with $\sum_{i=0}^{n-1} k_i = 1$;

- $M_i$ is the Mathis' bound associated with a sub-connection i.

The bandwidth attainable by the MPTCP connection is given by the weighted sum of the bandwidths attainable by each of the i TCP sub-connections. The split factor $k_i$ is computed for each one of the sub-connections. This factor could be computed by the MPTCP scheduler of the client terminal CT (not represented on the Figures) and then transferred to the application layer together with RTTi and pi for each one of the sub-connections. This approach is valid for the cross-layer variant.

In the case of the application layer variant, the $k_i$ factor could be assumed to be inversely proportional to the ratio of the RTT of the TCP sub-connection to the sum of the RTTs of all the TCP sub-connections, as it is shown in the following equation:

$$k_i = 1 - \frac{RTT_i}{\sum_{i=0}^{n-1} RTT_i}$$

This corresponds to the heuristics commonly used by the MPTCP scheduler to distribute the data of the MPTCP connection among the different TCP sub-connections.

The flowchart and/or block diagrams in the Figures illustrate the configuration, operation and functionality of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, or blocks may be executed in an alternative order, depending upon the functionality involved. It will also be noted that each block of the block diagrams and/or flowchart illustration, and combinations of the blocks in the block diagrams and/or flowchart illustration, can be implemented by special purpose hardware-based systems that perform the specified functions or acts, or combinations of special purpose hardware and computer instructions. While not explicitly described, the present embodiments may be employed in any combination or sub-combination.

As will be appreciated by one skilled in the art, aspects of the present principles can be embodied as a system, method or computer readable medium. Accordingly, aspects of the present principles can take the form of an entirely hardware embodiment, an entirely software embodiment (including firmware, resident software, micro-code, and so forth), or an embodiment combining software and hardware aspects that can all generally be referred to herein as a "circuit," "module", or "system." Furthermore, aspects of the present principles can take the form of a computer readable storage medium. Any combination of one or more computer readable storage medium(s) may be utilized.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a random access memory (RAM); a read-only memory (ROM); an erasable programmable read-only memory (EPROM or Flash memory); a portable compact disc read-only memory (CD-ROM); an optical storage device; a magnetic storage device; or any suitable combination of the foregoing.

## Claims

1. Method for estimating a bandwidth associated with a connection between a client terminal (CT) and a server (SE), said client terminal (CT) being configured to request and receive, from said server (SE), one or several segments of a multimedia content available at several representations,
**characterized in that** it comprises:

- determining (S1) the Mathis' bound associated with said connection between said client terminal (CT) and the server (SE) for requesting a given segment of said multimedia content;
- determining (S2) the average bit-rate of the last segment received, before said given segment, by the client terminal (CT) from the server (SE);
- selecting (S3) the minimum value between the determined Mathis' bound and the determined average bit-rate;
- estimating (S4) the bandwidth by using said selected minimum value.

2. Method according to claim 1, wherein the Mathis' bound of said connection is determined by:

$$M = C \times \frac{MSS}{RTT \times \sqrt{p}}$$

wherein:

- M is the Mathis' bound;
- C is a constant of proportionality;
- MSS is the maximum segment size;
- RTT is the round-trip-time of the connection;
- p is the probability that a packet of a segment is dropped.

**3.** Method according to claim 2, wherein, when said connection comprises several sub-connections, the Mathis' bound associated with the connection is determined by:

$$M = \sum_{i=0}^{n-1} k_i \times M_i$$

wherein:

- $k_i$ is a split factor corresponding to the fraction of the bandwidth achievable by a sub-connection i, with

$$\sum_{i=0}^{n-1} k_i = 1 ;$$

- $M_i$ is the Mathis' bound associated with a sub-connection i.

**4.** Method according to claim 2 or 3, wherein the Mathis' bound is determined, at the application layer of the Internet model, by using values of the probability of packet drop p and the round-trip time RTT chosen from a determined set of values.

**5.** Method according to claim 2 or 3, wherein the Mathis' bound is determined, at the application layer of the Internet model, by using values of the probability of packet drop p and the round-trip time RTT measured at the transport layer of the Internet model.

**6.** Method according to any of claims 1 to 5, wherein the average bit-rate of the given segment is determined by:

$$b = \frac{D}{t_{REQ} + t_{DL}}$$

wherein:

- b is the average bit-rate of the last segment received;
- D is the size of the last segment received;
- $t_{REQ}$ is the time elapsed between the request from the client terminal (CT) and its arrival to the server (SE);
- $t_{DL}$ is the time to download the last segment received from the server (SE), before said requested given segment.

**7.** Method according to any of claims 1 to 5, wherein the average bit-rate of the given segment is determined at the application layer of the Internet model.

**8.** Method according to any of claims 1 to 7, wherein the step of bandwidth estimation implements the following equation:

$$\hat{b}_t = \alpha \times b_{t-1} + (1-\alpha) \times \hat{b}_{t-1}$$

wherein:

- $\hat{b}_t$ is an estimation of the bandwidth at time t;
- $b_{t-1}$ is the selected minimum value;
- $\alpha$ is a constant smoothing factor belonging to the range [0; 1].

9. Method according to any of claims 1 to 7, wherein the step of bandwidth estimation implements the following two equations:

$$\hat{b}_t = \alpha \times b_{t-1} + (1-\alpha) \times (\hat{b}_{t-1} + \hat{v}_{t-1}), 0 \le \alpha \le 1$$

$$\hat{v}_t = \beta \times (\hat{b}_t - \hat{b}_{t-1}) + (1-\beta) \times \hat{v}_{t-1}, 0 \le \beta \le 1$$

wherein:

- $\hat{b}_t$ is an estimation of the bandwidth at time t;
- $b_{t-1}$ is selected minimum value;
- $\hat{v}_t$ is a bandwidth trend estimation at time t;
- $\alpha$ is a constant smoothing factor belonging to the range [0; 1];
- $\beta$ is a trend smoothing factor belonging to the range [0; 1].

10. Method according to any of claims 1 to 9, wherein said connection is a Transmission Control Protocol connection.

11. Method according to any of claims 1 to 9, wherein said connection is a multipath connection supported by the Multi Path Transmission Control Protocol.

12. Client terminal adapted to request and receive, from a server (SE), one or several segments of a multimedia content available at several representations; **characterized in that** it comprises:

- a computing module (7) configured to determine the Mathis' bound associated with a connection between said client terminal (CT) and a server (SE) for requesting a given segment of said multimedia content and to determine the average bit-rate of the last segment received, before said given segment, by the client terminal (CT) from the server (SE);
- a selecting module (8) configured to select the minimum value between the determined Mathis' bound and the determined average bit-rate;
- a bandwidth estimator (9) configured to estimate a bandwidth associated with said connection by using said selected minimum value.

13. Client terminal according to claim 12, wherein the computing module (7) is further configured to select values of a probability p, that a packet of a segment is dropped, and a round-trip time RTT from a set of determined values, in order to determine the Mathis' bound.

14. Client terminal according to claim 12, wherein the computing module (7) is further configured to retrieve values of a probability p, that a packet of a segment is dropped, and a round-trip time RTT, both measured at the transport layer of the Internet model in order to determine the Mathis' bound.

15. Client terminal according to any of claims 12 to 14, is a HTTP Adaptive Streaming client.

SE

N

CT

SE

**Figure 1**

CT

Client terminal

1 — Interface of connection

2 — Communicating module

3 — Adaptive streaming module

4 — Video player

B

5 — Processor

6 — Storing means

7 — Calculator

8 — Selecting module

9 — Bandwidth estimator

**Figure 2**

M

Determine the Mathis' bound associated with a TCP connection between a Client Terminal CT and a server SE — S1

Determine the average bit-rate of the last received segment by the Client Terminal CT from the server SE — S2

Select the minimum value between the determined Mathis' bound and the determined average bit-rate — S3

Estimate the bandwidth of the connection based on the selected minimum value — S4

## Figure 3

## EUROPEAN SEARCH REPORT

Europäisches
Patentamt

European
Patent Office

Office européen
des brevets

Application Number

EP 14 30 5481

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ROBERT KUSCHNIG ET AL: "Evaluation of HTTP-based request-response streams for internet video streaming", MMSYS '11 PROCEEDINGS OF THE SECOND ANNUAL ACM CONFERENCE ON MULTIMEDIA SYSTEMS, 23 February 2011 (2011-02-23), pages 245-256, XP055132313, New York, NY, USA DOI: 10.1145/1943552.1943585 ISBN: 978-1-45-030518-1 * the whole document * | 1-15 | INV. H04L29/06 H04L12/801 H04L12/811 |
| A | HACKER T J ET AL: "The end-to-end performance effects of parallel tcp sockets on a lossy wide-area network", PARALLEL AND DISTRIBUTED PROCESSING SYMPOSIUM., PROCEEDINGS INTERNATIO NAL, IPDPS 2002, ABSTRACTS AND CD-ROM FT. LAUDERDALE, FL, USA 15-19 APRIL 2002, LOS ALAMITOS, CA, USA,IEEE COMPUT. SOC, US, 15 April 2002 (2002-04-15), pages 46-55, XP010591067, ISBN: 978-0-7695-1573-1 * the whole document * | 1-15 | |

-/--

TECHNICAL FIELDS
SEARCHED (IPC)

H04L

The present search report has been drawn up for all claims

| Place of search | Date of completion of the search | Examiner |
|---|---|---|
| The Hague | 31 July 2014 | Mannekens, Jan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 928 145 A1**

## EUROPEAN SEARCH REPORT

Application Number

EP 14 30 5481

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BING WANG, JIM KUROSE, PRASHANT SHENOY DON TOWSLEY: "Multimedia streaming via TCP: an analytic performance study", ACM, 2 PENN PLAZA, SUITE 701 - NEW YORK USA, [Online] 10 October 2004 (2004-10-10), - 16 October 2004 (2004-10-16), pages 908-915, XP040010281, New York DOI: 10.1145/1027527.1027735 ISBN: 1-58113-893-8 XPSDOCS Retrieved from the Internet: URL:http://dl.acm.org/citation.cfm?id=1027735> * the whole document * ----- | 1-15 | |

TECHNICAL FIELDS SEARCHED (IPC)

The present search report has been drawn up for all claims

| Place of search | Date of completion of the search | Examiner |
|---|---|---|
| The Hague | 31 July 2014 | Mannekens, Jan |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................................
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- An experimental evaluation of rate-adaptation algorithms in adaptive streaming over HTTP. **SAAMER AKHSHABI ; ALI C. BEGEN ; CONSTANTINE DOVROLIS.** Proceedings of the Second Annual ACM Conference on Multimedia Systems, MMSys '11. ACM, 2011, 157-168

- **STEPHANE GOUACHE ; GUILLAUME BICHOT ; AMINE BSILA ; CHRISTOPHER HOWSON.** Distributed & adaptive HTTP streaming. *Proceedings of the IEEE International Conference on Multimedia and Expo (ICME'2011,* July 2011, 1-6